# EUROPÄISCHE PATENTSCHRIFT

(11) **EP 0 412 591 B1**
(45) Veröffentlichungstag und Bekanntmachung des Hinweises auf die Patenterteilung: **01.06.1994**
(21) Anmeldenummer: 90201959.5
(22) Anmeldetag: 18.07.1990
(51) Int. Cl.: B01D 53/02, B01D 53/34

(54) **Verfahren zur Abscheidung von Alkali- und Schwermetallverbindungen aus heissen Gasen**
Method of precipitating alkali and heavy metal compounds from hot gases
Méthode pour précipiter des composés des métaux alkali et lourds des gaz chauds

(30) Priorität: 11.08.1989 DE 3926574
(43) Veröffentlichungstag der Anmeldung: 13.02.1991
(73) Patentinhaber: METALLGESELLSCHAFT Aktiengesellschaft, 60015 Frankfurt (DE)
(72) Erfinder: Weber, Ekkehard. Prof. Dr., D-4300 Essen 17 (DE)

(56) Entgegenhaltungen:
- EP-A- 0 328 874
- DE-A- 3 100 357
- DE-A- 3 719 138
- DE-A- 3 720 963
- US-A- 4 101 631

## Beschreibung

Die Erfindung betrifft ein Verfahren zur Abscheidung von Alkali- und Schwermetallverbindungen, aus heißen Gasen, Temperatur deren 1200 bis 1800°C beträgt.

Es ist bekannt, daß Verbrennungsgase, die eine hohe Temperatur aufweisen, vorteilhaft zur Erzeugung elektrischer Energie verwendet werden können, da ihr Wärmeinhalt von einer Gasturbine mit sehr gutem Wirkungsgrad in elektrische Energie umgewandelt wird. Der restliche Wärmeinhalt des die Gasturbine verlassenden Verbrennungsgases kann in vorteilhafter Weise zur Erzeugung von Dampf in einem Dampfkessel genutzt werden. Aus wirtschaftlicher Sicht ist also die Erzeugung von Verbrennungsgasen anzustreben, die eine möglichst hohe Temperatur aufweisen, wobei diese Temperatur in der Praxis zwischen 1200 und 1800°C liegen muß.

Es ist ferner bekannt, daß die anorganischen Bestandteile der fossilen Brennstoffe bei der Verbrennung als Asche anfallen, die bei Temperaturen von 1200 bis 1800°C in schmelzflüssiger Form vorliegt, wobei die Ascheteilchen als Tröpfchen im Verbrennungsgas suspendiert sind. Außerdem enthält das Verbrennungsgas Alkali- und Schwermetallverbindungen, die dampfförmig vorliegen und somit Bestandteil der Gasphase sind. Bevor die heißen Verbrennungsgase einer Gasturbine zugeführt werden, müssen sowohl die flüssige Asche als auch die dampfförmigen Alkali- und Schwermetallverbindungen weitgehend abgetrennt werden, denn diese Stoffe zerstören die Gasturbine durch mechanische Erosion und durch Korrosion.

Aus der DE-A-31 49 579 ist ein Verfahren zum Entfernen von Alkalimetall-Verbindungen aus einem gasförmigen Strom bekannt. Dabei werden bei Temperaturen, die denen des alkalimetallhaltigen Gasstroms entsprechen, feinstteilige refraktäre Oxidteilchen erzeugt und dem Gasstrom zugemischt. Diese feinstteiligen Oxidteilchen mit einer durchschnittlichen Teilchengröße von 0,005 bis 1 µm sollen die Alkalimetall-Verbindungen adsorbieren, und obwohl sie im Gasstrom beim Durchgang durch die Gasturbine verbleiben, sollen keine Schädigungen der Turbine eintreten. Nachteilig bei der Nutzung dieses Verfahrens ist der hohe Aufwand zur Erzeugung der feinstteiligen refraktären Oxidteilchen, und bei der Herstellung dieser Teilchen aus Metalloidchloriden, daß zusätzliche Chlorverbindungen in den Gasstrom eingebracht werden.

In den Druckschriften DE-A 37 20 963, DE-A 37 33 337, DE-A 37 41 604 und DE-A 39 07 457 werden Verfahren und Vorrichtungen zur Abscheidung flüssiger Asche aus heißen Verbrennungsgasen vorgeschlagen, die aber nicht zur Abtrennung der in den Verbrennungsgasen enthaltenen dampfförmigen Alkali- und Schwermetallverbindungen geeignet sind.

Der Erfindung liegt die Aufgabe zugrunde, ein Verfahren zu schaffen, mit dem die Nachteile der bekannten Verfahren vermieden werden und eine weitgehende sowie kostengünstige Abtrennung der in heißen Verbrennungsgasen enthaltenen dampfförmigen Alkali- und Schwermetallverbindungen erreicht wird, wobei das Verfahren über einen längeren Zeitraum betriebssicher arbeitet. Es wurde nämlich festgestellt, daß die in Rede stehenden dampfförmigen Verbindungen bereits in Mengen von wenigen ppm in Gasturbinen Korrosion hervorrufen.

Die der Erfindung zugrundeliegende Aufgabe wird dadurch gelöst, daß die heißen Verbrennungsgase mit Sorbentien vor dem Eintritt in die Gasturbine behandelt werden, die aus SiO₂, Al₂O₃, Magnesiumaluminaten, Calciumaluminaten, Magnesiumalumosilicaten und/oder Calciumalumosilicaten bestehen, wobei in Abhängigkeit von der Behandlungsform der mittlere Teilchendurchmesser der Sorbentien zwischen 30 µm und 5 mm liegt. Es hat sich in überraschender Weise gezeigt, daß die entsprechend dem erfindungsgemäßen Verfahren zu verwendenden Sorbentien, die entweder in reiner Form oder als Gemisch eingesetzt werden, Alkali- und Schwermetallverbindungen mit hoher Effektivität nahezu quantitativ aus den Verbrennungsgasen entfernen, wobei chemische Reaktionen, Adsorptionsvorgänge und/oder Absorptionsvorgänge wirksam werden.

Das erfindungsgemäße Verfahren kann besonders erfolgreich durchgeführt werden, wenn die heißen Verbrennungsgase ein aus Sorbentienteilchen bestehendes Festbett durchströmen. Die Sorbentienteilchen haben hierbei einen mittleren Durchmesser von 0,5 bis 5 mm, und die Höhe des Festbetts beträgt vorteilhaft 0,5 bis 3 m, wobei im Festbett eine Gasgeschwindigkeit von 0,5 bis 2,5 m/sec. gefahren wird.

Das erfindungsgemäße Verfahren kann ferner besonders erfolgreich durchgeführt werden, wenn die heißen Verbrennungsgase eine aus Sorbentienteilchen bestehende Wirbelschicht durchströmen. Hierbei haben die Sorbentienteilchen einen mittleren Durchmesser von 0,3 bis 1,5 mm, und die Wirbelschicht wird mit einer Gasgeschwindigkeit von 1 bis 4 m/sec. betrieben, wobei das Verbrennungsgas als Wirbelgas dient. Die Höhe des Wirbelbettes liegt zwischen 1,5 und 3 m. Wenn das erfindungsgemäße Verfahren im Festbett oder in der Wirbelschicht durchgeführt wird, ist es vorteilhaft, die flüssige Asche vorher aus dem Verbrennungsgas abzutrennen, da anderenfalls der Gasdurchgang durch das Festbett bzw. durch die Wirbelschicht nachteilig beeinflußt werden kann.

Das erfindungsgemäße Verfahren kann schließlich besonders erfolgreich durchgeführt werden, wenn die Sorbentienteilchen in den heißen Verbrennungsgasen suspendiert werden. Hierbei haben die Sorbentienteilchen einen mittleren Durchmesser von 30 bis 2000 µm, und der Feststoffgehalt der Suspension beträgt 1 bis 100 g pro Betriebs-m³ Gas, wobei im Reaktionsraum eine Gasgeschwindigkeit von 1 bis 10 m/sec. gefahren wird. Der Zustand im Reaktionsraum entspricht dem einer Flugstaubwolke bzw. dem einer expandierten Wirbelschicht, wobei die Sorbentienteilchen auch im Kreislauf gefahren werden können, um einen möglichst hohen Umsetzungsgrad mit den abzuscheidenden Verbindungen zu erzielen. Der Reaktionsraum hat eine Länge von 1 bis 20 m und wird senkrecht von unten nach oben durchströmt.

Die Abscheidung der Sorbentienteilchen kann in aus keramischem Material bestehenden Zyklonen erfolgen, wenn das erfindungsgemäße Verfahren der Abscheidung der flüssigen Asche nachgeschaltet ist. Es ist aber auch möglich, die Sorbentienteilchen in den aschehaltigen Verbrennungsgasen zu dispergieren und die flüssige Asche sowie die Sorbentienteilchen gemeinsam an Filterelementen abzuscheiden. Diese Verfahrensvariante ist dann vorteilhaft anwendbar, wenn die Sorbentienteilchen während ihrer Reaktion mit den Alkali- und Schwermetallverbindungen schmelzen und somit in Form von Tröpfchen im Verbrennungsgas suspendiert sind.

Der Gegenstand der Erfindung wird nachfolgend anhand von Ausführungsbeispielen näher erläutert.

In einer Heizkammer wurden Ascheproben auf Temperaturen von 1200, 1300, 1400 und 1500°C erhitzt. Die Ascheproben wurden vor dem Erhitzen mit jeweils 2,5 Gew.% NaCl oder KCl vermischt. Nach Einbringen der NaCl- oder KCl-haltigen Ascheproben in die Heizkammer wurden die jeweiligen Temperaturen eingestellt und während 30 Minuten 3,3 l Luft pro Minute durch die Heizkammer geleitet. Die Luft nahm die verdampfenden Alkaliverbindungen auf und wurde durch ein alkalifreies Quarzrohr abgeleitet. Das Rohr ragte von der Oberseite her in die Heizkammer und wurde durch eine aus Zirkonoxid bestehende, 1 mm dicke poröse Keramikfilterplatte verschlossen. Auf dieser Platte wurde im Quarzrohr, das eine Wandstärke von 5 mm und einen Innendurchmesser von 10 mm hatte, ein aus Sorbentienteilchen bestehendes Festbett angeordnet, das eine Höhe von 4 bzw. 8 cm hatte und aus Pellets bestand. Die eingesetzte Sorbentienmenge betrug 2,5 bzw. 5 g. Als Sorbentien wurden Kaolin sowie Andalusit verwendet. Die bei den einzelnen Temperaturen von den Sorbentienteilchen aufgenommenen Mengen der Alkaliverbindungen sind in der nachfolgenden Tabelle angegeben. Die nicht von den Sorbentienteilchen aufgenommenen Alkaliverbindungen wurden ausgewaschen und quantitativ bestimmt, so daß nach einer entsprechenden Analyse der Ascheproben eine Stoffbilanz möglich war. Die durchgeführten Versuche lassen erkennen, daß mit dem erfindungsgemäßen Verfahren eine weitgehende Abtrennung der in den Verbrennungsgasen enthaltenen Alkali verbindungen möglich ist.

| | Abscheidegrad in % von Andalusit für | | Abscheidegrad in % von Kaolin für | |
|---|---|---|---|---|
| | Na | K | Na | K |
| 1200°C | 79 % | 83 % | 87 % | 75 % |
| 1300°C | 75 % | 78 % | 82 % | 73 % |
| 1400°C | 69 % | 72 % | 78 % | 70 % |
| 1500°C | 72 % | 73 % | 81 % | 73 % |

## Patentansprüche

1. Verfahren zur Abscheidung der Alkali- und Schwermetallverbindungen aus den bei der Verbrennung fossiler Brennstoffe anfallenden Gasen, deren Temperatur 1200 bis 1800°C beträgt, bei dem die heißen Verbrennungsgase vor ihrem Eintritt in die Gasturbine mit Sorbentien behandelt werden, die aus SiO₂, Al₂O₃, Magnesiumaluminaten, Calciumaluminaten, Magnesiumalumosilicaten und/oder Calciumalumosilicaten bestehen sowie einen mittleren Teilchendurchmesser von 30 µm bis 5 mm aufweisen.

2. Verfahren nach Anspruch 1, bei dem die heißen Verbrennungsgase ein aus Sorbentienteilchen bestehendes Festbett durchströmen, wobei der mittlere Teilchendurchmesser der Sorbentien zwischen 0,5 und 5 mm liegt.

3. Verfahren nach Anspruch 1, bei dem die heißen Verbrennungsgase eine aus Sorbentienteilchen bestehende Wirbelschicht durchströmen, wobei der mittlere Teilchendurchmesser der Sorbentien zwischen 0,3 und 1,5 mm liegt.

4. Verfahren nach Anspruch 1, bei dem die Sorbentienteilchen in den heißen Verbrennungsgasen suspendiert werden, wobei der mittlere Teilchendurchmesser der Sorbentien zwischen 30 und 2000 µm liegt.

## Claims

1. A method for separating the alkali and heavy metal compounds out of the gases produced upon the combustion of fossil fuels, the temperature of which gases is 1200 to 1800 °C in which the hot combustion gases before entering the gas turbine are treated with sorbents which consist of SiO₂, Al₂O₃, magnesium aluminates, calcium aluminates, magnesium aluminosilicates and/or calcium aluminosilicates and have an average particle diameter of 30 µm to 5 mm.

2. A method according to Claim 1, in which the hot combustion gases flow through a fixed bed consisting of sorbent particles, the average particle diameter of the sorbents being between 0.5 and 5 mm.

3. A method according to Claim 1, in which the hot combustion gases flow through a fluidised bed consisting of sorbent particles, the average particle diameter of the sorbents being between 0.3 and 1.5 mm.

4. A method according to Claim 1, in which the sorbent particles are suspended in the hot combustion gases, the average partial diameter of the sorbents being between 30 and 2000 µm.

## Revendications

1. Procédé de séparation de composés de métal alcalin et de métal lourd de gaz se produisant lors de la combustion de combustibles fossiles et dont la température est comprise entre 1200 et 1800°C, qui consiste à traiter les gaz de combustion chauds avant leur entrée dans la turbine à gaz par des agents adsorbants constitués de SiO₂, d'Al₂O₃, d'aluminate de magnésium, d'aluminate de calcium, d'aluminosilicate de magnésium et/ou d'aluminosilicate de calcium et ayant un diamètre moyen de particules de 30 µm à 5 mm.

2. Procédé suivant la revendication 1, qui consiste à faire passer les gaz de combustion chauds dans un lit fixe en particules d'agents d'adsorption, le diamètre moyen des particules des agents d'adsorption étant compris entre 0,5 et 5 mm.

3. Procédé suivant la revendication 1, qui consiste à faire passer les gaz de combustion chauds dans un lit fluidisé constitué de particules d'agents d'adsorption, le diamètre moyen des particules des agents d'adsorption étant compris entre 0,3 et 1,5 mm.

4. Procédé suivant la revendication 1, qui consiste à mettre les particules d'agents d'adsorption en suspension dans les gaz de combustion chauds, le diamètre moyen de particules des agents d'adsorption étant compris entre 30 et 2000 µm.
